# EUROPÄISCHE PATENTSCHRIFT

(11) **EP 1 420 003 B1**
(45) Veröffentlichungstag und Bekanntmachung des Hinweises auf die Patenterteilung: **15.09.2004**
(21) Anmeldenummer: 03024532.8
(22) Anmeldetag: 27.10.2003
(51) Int. Cl.: C04B 35/043, C04B 35/66, C04B 35/634

(54) **Feuerfester Reparaturmassenversatz**
Repair refractory composition
Mélange refractaire servant à des réparations

(30) Priorität: 18.11.2002 DE 10253712
(43) Veröffentlichungstag der Anmeldung: 19.05.2004
(73) Patentinhaber: Refratechnik Holding GmbH, 85737 Ismaning (DE)
(72) Erfinder: Jansen, Helge, Dr., 37133 Friedland (DE); Grosse Daldrup, Heinrich, Dr., 40667 Meerbusch (DE)
(74) Vertreter: Patentanwälte Dr. Solf & Zapf

(56) Entgegenhaltungen:
- US-A- 4 096 004

## Beschreibung

Die Erfindung betrifft einen feuerfesten Reparaturmassenversatz zur Reparatur von Verschleißstellen in feuerfesten Auskleidungen, insbesondere in metallurgischen Öfen oder Gefäßen z.B. in Konvertern.

Derartige Reparaturmassen werden auch Heißreparaturmassen genannt, weil sie in den heißen Ofen bzw. in das heiße Gefäß eingebracht werden. Repariert werden damit sog. Vorverschleißstellen, d.h. Stellen der feuerfesten Auskleidung, die Ausbruch oder Abplatzungen aufweisen, die noch keinen vollständigen Ausbau und Ersatz der feuerfesten Auskleidung erfordern. Dabei werden Massen je nach Art und Aufbau des Versatzes z.B: pneumatisch verspritzt oder gegossen oder geschüttet oder durch Ausschwenken eingebracht. Das Verspritzen ermöglicht ein zielgenaues Auftragen auf die zu reparierenden Stellen, weshalb dieses Verfahren bevorzugt wird.

Es ist bekannt, basische Heißreparaturmassen, insbesondere auch basische Auskleidungen zu verspritzen, die mit Wasser angemacht sind und i.d.R. keinen Kohlenstoff enthalten. Zudem sind basische Heißreparaturmassen bekannt, die kohlenstoffhaltig sein können und wasserfrei sind. Diese Reparaturmassen können aber nicht verspritzt werden.

Das Wasser in den Heißreparaturmassen führt zu sehr starken Temperaturwechselbelastungen an den Reparaturstellen und damit zu Rissbildungen, die den Reparaturerfolg beeinträchtigen. Zudem können nur relativ geringe Haftkräfte zwischen Reparaturmasse und Reparaturstelle erzielt werden, so dass die Verschleißbeständigkeit an der Reparaturstelle gemindert ist. Das Wasser greift außerdem das basische Material der feuerfesten Auskleidung an, das durch Hydratation zerstört werden kann.

Die genannten Nachteile der wasserhaltigen Heißreparaturmassen weisen zwar kohlenstoffhaltige Heißreparaturmassen nicht auf, diese Massen können aber nicht verspritzt werden.

Aufgabe der Erfindung ist, eine wasserfreie arbeitshygienisch unbedenkliche und ungiftige Heißreparaturmasse zu schaffen, die fließ- und rieselfähig einstellbar und somit verspritzbar, gießbar, einschüttbar und ausschwenkbar ist, eine sehr gute Haftung und Verschleißfestigkeit gewährleistet und keine schädlichen Temperaturwechselbelastungen verursacht.

Diese Aufgabe wird durch eine Heißreparaturmasse mit den Merkmalen des Anspruchs 1 gelöst. Vorteilhafte Weiterbildungen der Erfindung werden in den Unteransprüchen gekennzeichnet.

Erfindungsgemäß weist die Heißreparaturmasse mindestens eine Resistorkomponente in Form eines an sich bekannten feuerfesten Materials wie MgO, Dolomit, Al₂O₃, MgAl₂O₄, SiO₂, ZrO₂, Chromoxid auf. Dieses feuerfeste Material wird dem zu reparierenden Auskleidungsmaterial entsprechend ausgewählt und vorzugsweise in einer Körnung verwendet, die der Körnung des Auskleidungsmaterials des Ofens oder Gefäßes angepasst ist.

Die i.d.R. rieselfähige Resistorkomponente in Granulatform wird in ein mehrfach funktionelles Bindersystem aus mindestens einer Hartbitumenkomponente in Granulatform, mindestens einem bei Anwendungstemperatur zündfähigem Metallpulver und mindestens einem bei Anwendungstemperatur brennbaren mineralischen Öl eingebettet.

Das Bindemittelsystem bindet die Körner der Resistorkomponente bindemittelartig untereinander, so dass eine verarbeitbare Heißreparaturmasse steuerbarer Konsistenz hergestellt werden kann. Die Konsistenz kann derartig eingestellt werden, dass die Masse entweder spritzbar oder gießbar oder schüttbar oder rieselfähig oder ausschwenkbar ist; die Masse kann demgemäß insoweit technologisch universell eingebracht werden.

Das Bindersystem ist selbstzündend und zündet spätestens beim Auftreffen auf die heiße Reparaturstelle; zudem reagiert das Bindersystem exotherm. Das Bindersystem wird beim Auftragen zunächst klebrig und haftet bzw. verkrallt sich sehr gut an der Reparaturstelle, indem es in die Poren oder Vertiefungen eindringt, so dass auch steile bis vertikale oder überhängende verschlissene Wandungsbereiche repariert werden können.

Zudem bildet das Bindersystem durch Verkokung des Bitumens eine Kohlenstoffmatrix, die die Resistorkomponente über die an sich bekannte Kohlenstoffbindung bindet, wobei der Matrixkohlenstoff - wie ebenfalls an sich bekannt - die Benetzbarkeit des Reparaturmaterials in situ bezüglich des metallurgischen Materials im Ofen oder Gefäß nach dem Auftragen in der gewünschten Weise unterdrückt.

Das Metallpulver des Bindersystems soll etwa bei 500 °C zünden und das Mineralöl, das als Energieträger dient und insbesondere ein Schweröl, z.B. Fluxöl oder Altöl ist, zum Brennen bringen, wodurch das Hartbitumen schmilzt, die erforderliche Mobilität der Reparaturmasse im heißen Zustand erbringt und verkokt und damit die erfindungsgemäß gewünschten, oben beschriebenen Eigenschaften gewährleistet.

Das feinteilige Metallpulver, das vorzugsweise in einer Feinheit von 90 Gew.-% < 45 µm verwendet wird, oxidiert und die Metalloxide verursachen Sinterreaktionen zwischen den Resistorkörnern der Reparaturmasse sowie zwischen den Resistorkörnern der Reparaturmasse und dem Auskleidungsmaterial, so dass eine sehr gute Haftung auch durch eine keramische Bindung erzeugt wird.

Das Mineralöl, das vorzugsweise ein Fluxöl ist, dient sowohl als Energieträger als auch als Staubbinder, so dass die Masse beim Anmachen nicht staubt und während der Reparaturarbeiten sehr gut handhabbar ist. Es dient außerdem zur Einstellung der gewünschten Konsistenz der Masse bezüglich der Anwendungstechnik.

Für eine zu verspritzende Masse wird z.B. etwas mehr Fluxöl verwendet, als für eine rieselfähige Masse.

Vorzugsweise wird zur Verbesserung der Kohlenstoffbindung der Masse mindestens ein weiterer Kohlenstoffträger wie Graphit, z.B. Flockengraphit oder Ruß zugesetzt.

Die erfindungsgemäße Reparaturmasse zeichnet sich somit durch eine Kohlenstoffbindung und eine keramische Bindung aus und gewährleistet dadurch eine besonders hohe Verschleißfestigkeit. Sie ist an das Auskleidungsmaterial auf einfache Weise durch Auswahl der Resistorkomponente anpassbar und durch die wählbare Konsistenz universell einsetzbar. Temperaturwechselbelastungen werden nicht verursacht. Die erfindungsgemäßen Reparaturmassen sind mit den üblichen Spritzmaschinen verspritzbar.

Vorzugsweise werden folgende Versätze für die erfindungsgemäße Heißreparaturmasse verwendet:
45 - 90 Gew.-%,
   insb. 67 - 80 Gew.-% Resistorkomponente,
   z.B. MgO Sinter,

1,5 - 25 Gew.-%,
   insb. 4 - 10 Gew.-% Metallpulver,
   z.B. Si-Pulver,
3,5 - 20 Gew.-%,
   insb. 10 - 15 Gew.-% Hartbitumengranulat,
5 - 10 Gew.-%,
   insb. 6 - 8 Gew.-% Mineralöl,
   z.B. Fluxöl.

Nach der Erfindung werden zunächst die trockenen Komponenten des Heißreparaturmassenversatzes wie Resistorkomponente, Hartbitumen, Metallpulver und ggf. die weiteren Kohlenstoffträgerkomponenten, die bis zu 6 Gew.-% zugesetzt werden können, in einem Zwangsmischer gemischt und danach das Mineralöl zugesetzt. Anschließend wird die Masse in Säcke verpackt und ist dann verarbeitungsfähig auslieferbar.

Beispielsweise wurde in einem Zwangsmischer nach dem erfindungsgemäßen Verfahren eine Masse aus folgenden Bestandteilen gemischt:
70 Gew.-% MgO Sinter,
4 Gew.-% Flockengraphit,
6 Gew.-% Si-Pulver,
13 Gew.-% Hartbitumengranulat,
7 Gew.-% Fluxöl.

Diese Reparaturmasse wurde vor Ort in einem Stahlwerk im Konverterhut eines Konverters mit einer vorhandenen Rotorspritzmaschine auf eine zu reparierende Vorverschleißstelle gespritzt. Die Reparaturstelle war auch nach 30 Chargenwechseln noch intakt. Die bisher in diesem Stahlwerk verwendeten bekannten Reparaturmassen konnten im Vergleich lediglich bis maximal 15 Chargen aushalten.

## Patentansprüche

1. Feuerfeste Reparaturversatzmasse aufweisend eine feuerfeste, insbesondere basische Resistorkomponente in Granulatform sowie ein Bindersystem,
**dadurch gekennzeichnet, dass**
das Bindersystem mindestens eine Hartbitumenkomponente in Granulatform, mindestens ein zündfähiges Metallpulver und mindestens ein brennbares mineralisches Öl enthält.

2. Reparaturmasse nach Anspruch 1,
**dadurch gekennzeichnet, dass**
die Resistorkomponente MgO und/oder Dolomit und/oder Al₂O₃ und/oder MgAl₂O₄ und/oder SiO₂ und/oder ZrO₂ und/oder Chromoxid ist.

3. Reparaturmasse nach Anspruch 1 und/oder 2,
**dadurch gekennzeichnet, dass**
die Resistorkomponente in einer Körnung vorliegt, die der Körnung des zu reparierenden Auskleidungsmaterials entspricht.

4. Reparaturmasse nach einem oder mehreren der Ansprüche 1 bis 3,
**dadurch gekennzeichnet, dass**
sie eine spritzbare oder gießbare oder schüttbare oder rieselfähige oder ausschwenkbare Konsistenz aufweist.

5. Reparaturmasse nach einem oder mehreren der Ansprüche 1 bis 4,
**dadurch gekennzeichnet, dass**
sie bei den Anwendungstemperaturen selbstzündend reagiert.

6. Reparaturmasse nach einem oder mehreren der Ansprüche 1 bis 5,
**dadurch gekennzeichnet, dass**
sie bei Anwendungstemperaturen exotherm reagiert.

7. Reparaturmasse nach einem oder mehreren der Ansprüche 1 bis 6,
**dadurch gekennzeichnet, dass**
sie bei Anwendungstemperaturen eine Kohlenstoffbindung bildet.

8. Reparaturmasse nach einem oder mehreren der Ansprüche 1 bis 7,
**dadurch gekennzeichnet, dass**
sie bei Anwendungstemperaturen eine keramische Bindung bildet.

9. Reparaturmasse nach einem oder mehreren der Ansprüche 1 bis 8,
**dadurch gekennzeichnet, dass**
das Metallpulver bei etwa 500 °C zündet.

10. Reparaturmasse nach einem oder mehreren der Ansprüche 1 bis 9,
**dadurch gekennzeichnet, dass**
das Mineralöl bei Anwendungstemperaturen brennt und insbesondere ein Schweröl, z.B. ein Fluxöl oder Altöl ist.

11. Reparaturmasse nach einem oder mehreren der Ansprüche 1 bis 10,
**dadurch gekennzeichnet, dass**
das Hartbitumen bei Anwendungstemperaturen schmilzt und verkokt und die Kohlenstoffbindung bildet.

12. Reparaturmasse nach einem oder mehreren der Ansprüche 1 bis 11,
**dadurch gekennzeichnet, dass**
das Metallpulver oxidiert und Sinterreaktionen zwischen den Resistorkörnern sowie zwischen den Resistorkörnern und dem Auskleidungsmaterial bewirkt.

13. Reparaturmasse nach einem oder mehreren der Ansprüche 1 bis 12,
**dadurch gekennzeichnet, dass**
das Metallpulver eine Feinheit von 90 Gew.-% < 45 µm aufweist.

14. Reparaturmasse nach einem oder mehreren der Ansprüche 1 bis 13,
**dadurch gekennzeichnet, dass**
sie mindestens einen weiteren Kohlenstoffträger, insbesondere Graphit, z.B. Flockengraphit oder Ruß, vorzugsweise in Mengen bis zu 6 Gew.-% enthält.

15. Reparaturmasse nach einem oder mehreren der Ansprüche 1 bis 14,
**dadurch gekennzeichnet, dass**
sie die folgenden Zusammensetzungen aufweist:
45 - 90 Gew.-%,
insb. 67 - 80 Gew.-% Resistorkomponente,
z.B. MgO Sinter,
1,5 - 25 Gew.-%,
insb. 4 - 10 Gew.-% Metallpulver,
z.B. Si-Pulver,
3,5 - 20 Gew.-%,
insb. 10 - 15 Gew.-% Hartbitumengranulat,
5 - 10 Gew.-%,
insb. 6 - 8 Gew.-% Mineralöl,
z.B. Fluxöl.

16. Verfahren zur Herstellung einer feuerfesten Reparaturversatzmasse nach einem oder mehreren der Ansprüche 1 bis 15,
**dadurch gekennzeichnet, dass**
die trockenen Komponenten wie Resistorkomponente, Hartbitumen, Metallpulver und ggf. der weitere Kohlenstoff träger in einem Zwangmischer gemischt und danach das Mineralöl zugesetzt wird.

17. Verfahren nach Anspruch 16,
**dadurch gekennzeichnet, dass**
die Masse in Säcke verpackt wird.

## Claims

1. Refractory repair batch material which includes a refractory, in particular basic resistor component in granule form and a binder system, **characterized in that** the binder system contains at least one hard bitumen component in granule form, at least one ignitable metal powder and at least one combustible mineral oil.

2. Repair material according to Claim 1, **characterized in that** the resistor component is MgO and/or dolomite and/or Al₂O₃ and/or MgAl₂O₄ and/or SiO₂ and/or ZrO₂ and/or chromium oxide.

3. Repair material according to Claim 1 and/or 2, **characterized in that** the resistor component is present in a grain size which corresponds to the grain size of the lining material which is to be repaired.

4. Repair material according to one or more of Claims 1 to 3, **characterized in that** has a consistency which can be sprayed or cast or poured or is free-flowing or can be centrifuged.

5. Repair material according to one or more of Claims 1 to 4, **characterized in that** it reacts in a self-igniting manner at the temperatures of use.

6. Repair material according to one or more of Claims 1 to 5, **characterized in that** it reacts exothermically at temperatures of use.

7. Repair material according to one or more of Claims 1 to 6, **characterized in that** it forms a carbon binding at temperatures of use.

8. Repair material according to one or more of Claims 1 to 7, **characterized in that** it forms a ceramic binding at temperatures of use.

9. Repair material according to one or more of Claims 1 to 8, **characterized in that** the metal powder ignites at approximately 500ºC.

10. Repair material according to one or more of Claims 1 to 9, **characterized in that** the mineral oil burns at temperatures of use and in particular is a heavy oil, e.g. a flux oil or used oil.

11. Repair material according to one or more of Claims 1 to 10, **characterized in that** the hard bitumen melts and cokes, forming the carbon binding, at temperatures of use.

12. Repair material according to one or more of Claims 1 to 11, **characterized in that** the metal powder oxidizes and brings about sintering reactions between the resistor grains and also between the resistor grains and the lining material.

13. Repair material according to one or more of Claims 1 to 12, **characterized in that** the metal powder has a fineness of 90% by weight < 45 µm.

14. Repair material according to one or more of Claims 1 to 13, **characterized in that** it contains at least one further carbon carrier, in particular graphite, e.g. flake graphite, or carbon black, preferably in amounts of up to 6% by weight.

15. Repair material according to one or more of Claims 1 to 14, **characterized in that** it has the following compositions:
45 - 90% by weight,
in particular 67 - 80% by weight of resistor component,
e.g. MgO sinter,
1.5 - 25% by weight,
in particular 4 - 10% by weight of metal powder,
e.g. Si powder,
3.5 - 20% by weight,
in particular 10 - 15% by weight of hard bitumen granules,
5 - 10% by weight,
in particular 6 - 8% by weight of mineral oil,
e.g. flux oil.

16. Process for producing a refractory repair batch material according to one or more of Claims 1 to 15, **characterized in that** the dry components, such as resistor component, hard bitumen, metal powder and, if used, the further carbon carrier, are mixed in a positive mixer and then the mineral oil is added.

17. Process according to Claim 16, **characterized in that** the material is packaged in sacks.

## Revendications

1. Masse d'une composition réfractaire de réparation présentant un composant résistant, en particulier basique, sous forme d'un granulat ainsi qu'un système liant, **caractérisée en ce que** le système liant contient au moins un composant de bitume dur sous forme de granulat, au moins une poudre métallique inflammable et au moins une huile minérale combustible.

2. Masse de réparation selon la revendication 1, **caractérisée en ce que** le composant résistant est du MgO et/ou de la dolomite et/ou du Al₂O₃ et/ou du MgAl₂O₄ et/ou du SiO₂ et/ou du ZrO₂ et/ou de l'oxyde de chrome.

3. Masse de réparation selon la revendication 1 et/ou 2, **caractérisée en ce que** le composant résistant se trouve dans une granulométrie qui correspond à la granulométrie du matériau du revêtement à réparer.

4. Masse de réparation selon l'une ou plusieurs des revendications 1 à 3, **caractérisée en ce qu'**elle présente une consistance pouvant être pulvérisée ou coulée ou déversée ou pouvant s'écouler ou pouvant être versée.

5. Masse de réparation selon l'une ou plusieurs des revendications 1 à 4, **caractérisée en ce qu'**elle réagit de manière auto-inflammable aux températures d'utilisation.

6. Masse de réparation selon l'une ou plusieurs des revendications 1 à 5, **caractérisée en ce qu'**elle réagit de manière exothermique aux températures d'utilisation.

7. Masse de réparation selon l'une ou plusieurs des revendications 1 à 6, **caractérisée en ce qu'**elle forme une liaison carbonée aux températures d'utilisation.

8. Masse de réparation selon l'une ou plusieurs des revendications 1 à 7, **caractérisée en ce qu'**elle forme une liaison céramique aux températures d'utilisation.

9. Masse de réparation selon l'une ou plusieurs des revendications 1 à 8, **caractérisée en ce que** la poudre métallique s'enflamme à environ 500°C.

10. Masse de réparation selon l'une ou plusieurs des revendications 1 à 9, **caractérisée en ce que** l'huile minérale brûle aux températures d'utilisation et est en particulier une huile lourde, par exemple un flux ou une huile usée.

11. Masse de réparation selon l'une ou plusieurs des revendications 1 à 10, **caractérisée en ce que** le bitume dur fond aux températures d'utilisation et cokéfie et forme la liaison carbonée.

12. Masse de réparation selon l'une ou plusieurs des revendications 1 à 11, **caractérisée en ce que** la poudre métallique s'oxyde et provoque des réactions de frittage entre les grains du composant résistant ainsi qu'entre les grains du composant résistant et le matériau du revêtement.

13. Masse de réparation selon l'une ou plusieurs des revendications 1 à 12, **caractérisée en ce que** la poudre métallique présente une finesse de 90% en poids < 45 µm.

14. Masse de réparation selon l'une ou plusieurs des revendications 1 à 13, **caractérisée en ce qu'**elle contient au moins un autre support carboné, en particulier le graphite, par exemple le graphite floconneux ou la suie, de préférence en des quantités jusqu'à 6% en poids.

15. Masse de réparation selon l'une ou plusieurs des revendications 1 à 14, **caractérisée en ce qu'**elle présente les compositions suivantes :
45 à 90% en poids, en particulier 67 à 80% en poids de composant résistant, par exemple le MgO fritté,
1,5 à 25% en poids, en particulier 4 à 10% en poids de poudre métallique, par exemple la poudre de Si,
3,5 à 20% en poids, en particulier 10 à 15% en poids de granulat de bitume dur,
5 à 10% en poids, en particulier 6 à 8% en poids d'huile minérale, par exemple un flux.

16. Procédé pour la préparation d'une masse d'une composition réfractaire de réparation selon l'une ou plusieurs des revendications 1 à 15, **caractérisé en ce que** les composants secs, tels que le composant résistant, le bitume dur, la poudre métallique et le cas échéant le support carboné supplémentaire, sont mélangés dans un malaxeur à mélange forcé, puis l'huile minérale est ajoutée.

17. Procédé selon la revendication 16, **caractérisé en ce que** la masse est emballée dans des sachets.
